# EUROPÄISCHE PATENTSCHRIFT

(11) **EP 3 749 485 B1**
(45) Veröffentlichungstag und Bekanntmachung des Hinweises auf die Patenterteilung: **04.12.2024**
(21) Anmeldenummer: 19710616.4
(22) Anmeldetag: 28.02.2019
(51) Int. Cl.: B24B 9/10, B24B 7/24, B23K 26/00, B23K 26/402, B32B 17/10, B23K 26/364

(54) **ENTSCHICHTUNGSEINRICHTUNGEN UND -VERFAHREN ZUM ENTSCHICHTEN VON GLASTAFELN, VORZUGSWEISE VERBUNDGLASTAFELN**
COATING REMOVAL DEVICES AND METHODS FOR REMOVING COATINGS FROM SHEETS OF GLASS, PREFERABLY LAMINATED SHEETS OF GLASS
DISPOSITIF ET PROCÉDÉ D'ENLÈVEMENT DE COUCHES DE PLAQUES DE VERRE, DE PRÉFÉRENCE DE PLAQUES DE VERRE FEUILLETÉ

(30) Priorität: 29.03.2018 DE 102018107697
(43) Veröffentlichungstag der Anmeldung: 16.12.2020
(60) Teilanmeldung: 23200095.0
(73) Patentinhaber: HEGLA boraident GmbH & Co. KG, 37688 Beverungen (DE)
(72) Erfinder: HÖTGER, Bernhard, 37697 Lauenförde (DE); RAINER, Thomas, 38855 Wernigerode OT Minsleben (DE)
(74) Vertreter: Dr. Solf & Zapf Patent- und Rechtsanwalts PartG mbB
(86) Internationale Anmeldenummer: PCT/EP2019/054966
(87) Internationale Veröffentlichungsnummer: WO 2019/185279

(56) Entgegenhaltungen:
- EP-A1- 3 034 478
- EP-A2- 2 279 983
- WO-A1-2016/096435
- DE-A1- 102007 015 767
- DE-C2- 4 118 241
- US-A1- 2013 140 291

## Beschreibung

Die vorliegende Erfindung betrifft ein Entschichtungsverfahren zum Randentschichten von Glastafeln, vorzugsweise Verbundglastafeln, sowie eine Verwendung einer Entschichtungseinrichtung hierfür.

Als Flachglas wird jedes Glas in Form von Scheiben bzw. Tafeln bezeichnet, unabhängig vom angewandten Herstellungsverfahren. Um Flachglastafeln mit Filter-, Spiegel-, Heizfunktionen oder sonstigen Funktionen zu versehen, werden die unterschiedlichsten, ein- oder mehrlagigen Funktionsbeschichtungen auf die Flachglastafeln aufgebracht. Die Funktionen können dabei z.B. Wärmeschutz, Sonnenschutz, oder Beheizung sein. Bei den einzelnen Funktionsschichten handelt es sich in der Regel um metallische Schichten. Beispielsweise handelt es sich um Niedrigemissionsschichten oder elektrische Heizschichten. Zwischen den einzelnen metallischen Funktionsschichten einer Funktionsbeschichtung können eine oder mehrere dielektrische (Funktions)schichten, z.B. aus einem Oxid, wie Aluminiumoxid, angeordnet sein.

Die Aufbringung der einzelnen Funktionsschichten erfolgt vorzugsweise auf Flachglasrohtafeln maximaler handelsüblicher Größe (6.100 mm x 3.250 mm). Aus diesen großflächig beschichteten Flachglasrohtafeln werden anschließend nach Bedarf Einzelscheiben geschnitten, die dann zu Funktionseinheiten weiterverarbeitet werden. Diese Funktionseinheiten können z. B. Isolierglaseinheiten sein, wobei die Scheibenränder der Einzelscheiben mit z. B. Abstandhaltereinrichtungen verklebt werden. Für diesen Randverbund werden Randverbundkleber verwendet, wobei die Randverbundkleber ausschließlich für den direkten Verbund mit Glasoberflächen und nicht mit den Funktionsschichten ausgelegt sind. Die Flachglasrohtafeln müssen deshalb im Bereich der Verklebung entschichtet werden, wobei die Entschichtungsbreite z. B. etwa 10 mm beträgt. Ohne Entschichtung ist eine zuverlässige Haftung des Randverbundklebers nicht gewährleistet. Diesen Vorgang bezeichnet man als Randentschichtung.

Die Randentschichtung erfolgt dabei entlang der Glastafelkanten und/oder entlang von späteren Schneid- bzw. Ritz- bzw. Trennlinien, entlang derer die Flachglasrohtafeln nach dem Entschichten in einzelne Glastafeln zerteilt werden.

In der Regel ist die funktionelle Beschichtung eine einzelne Funktionsschicht oder ein Schichtaufbau mit mehreren Funktionsschichten mit einer Gesamtdicke < 2 µm. Der Schichtaufbau wird in der Regel durch Abscheidevorgänge erhalten.

Bei bereits auf Endmaß geschnittenen Glastafeln erfolgt das Randentschichten beispielsweise entlang der Glastafelkanten in einfacher Entschichtungsbreite. Bei den Glasrohtafeln wird in doppelter Entschichtungsbreite beidseitig neben der späteren Schneid- bzw. Ritz-. bzw. Trennlinie entschichtet. Auch hier kann aber - bei entsprechendem Maß der Glastafel und Qualität der Glastafelkanten - entlang der Glastafelkanten in einfacher Entschichtungsbreite entschichtet werden. Im Bereich der späteren Schneid- bzw. Ritz- bzw. Trennlinien sind die erzeugten Entschichtungsspuren somit doppelt so breit wie im Bereich der Glastafelkanten. Bei der Entschichtung der Kanten ist allerdings von Nachteil, dass durch das Überfahren der scharfen Kanten mit Entschichtungswerkzeugen letztere stark und unsymmetrisch abgenutzt werden können.

Das Abtragen der Funktionsschichten erfolgt auf dem Fachgebiet beispielsweise mittels mechanischer Abtragung durch Schleifwerkzeuge oder durch Sandstrahlen. Es kann aber auch mit Gasbrennern erfolgen.

Aus der DE 41 18 241 C2, die Basis für den Oberbegriff des Anspruchs 1 bildet, ist es beispielsweise bekannt, Schleifvorrichtungen für die Entschichtung zu verwenden. Hierbei wird entlang der Schneidlinien T die Beschichtung von der Glasrohtafel abgeschliffen. Die Schnittführung erfolgt danach in der Längsmitte der so erhaltenen Entschichtungsspur. Die durch die Schneidlinien gebildete Schneidkontur wird von Rand- und Nullschnitten R begrenzt, wobei diese Rand- und Nullschnitte von den Außenkanten der Flachglasrohtafeln beabstandet sind.

Aus der DE 34 03 682 sind ein Verfahren und eine Vorrichtung bekannt, bei denen Entschichtungs- und Schneidvorgang zusammengefasst sind, wobei die Entschichtung mit Gasbrennern erfolgt.

Das deutsche Gebrauchsmuster DE 20 2013 104 834 U1 betrifft einen Tisch zum Bearbeiten nichtmetallischer, transparenter Materialien durch Laserstrahlung, insbesondere zum Entfernen von metallischen Beschichtungen, beispielsweise von Niedrigemissionsbeschichtungen, und anderer Beschichtungen, von Glas.

Auch die EP 1 864 950 A1, die WO 2016/096435 A1 und die DE 10 2007 015 767 A1 offenbaren jeweils das Entschichten von Glassubstraten (Flachglas, Solarzelle) unter Verwendung eines Lasers. Bei dem zu abzutragenden Material handelt es sich jeweils um die Funktionsschicht.

Des Weiteren gibt es seit einiger Zeit Glasarten, bei denen die Funktionsbeschichtung oder auch nur die unbeschichtete Glasoberfläche (bei Glastafeln ohne Funktionsbeschichtung) durch eine abziehbare Schutzfolie (TPF= temporary protective film) oder eine Polymerschutzschicht (z. B. EasyPro^{®} von St. Gobain) geschützt ist, um diese vor eventuellen mechanischen Beschädigungen zu bewahren. Die Polymerschutzschicht ist z.B. durch Aufspritzen aufgebracht und nicht abziehbar, sondern mit der jeweiligen Oberfläche fest verbunden. Sie verbrennt allerdings während des Temperns im Ofen problemlos und rückstandsfrei.

Für die weitere Verarbeitung der Glastafeln, z.B. die Isolierglasfertigung, müssen selbstverständlich analog zu den Funktionsschichten auch die Schutzfolie bzw. die Polymerschutzschicht zumindest an den späteren Randbereichen entfernt werden. Das Abtragen der Schutzfolie bzw. der Polymerschutzschicht erfolgt momentan mechanisch mittels eines Schleifwerkzeuges, insbesondere mittels eines Schleifrädchens. Weist die Glastafel dabei eine Funktionsbeschichtung auf, werden die Schutzfolie bzw. die Polymerschutzschicht und die Funktionsbeschichtung in einem Arbeitsgang abgeschliffen.

Dies ist allerdings nicht unproblematisch. Denn beim mechanischen Abschleifen der Polymerschutzschicht entsteht sehr viel Staub, der dann die Anlage verdreckt und Bauteile beschädigt und auch eine Gefahr für die Gesundheit darstellen kann. Beim Abschleifen der Schutzfolie rollt diese sich bei höheren Vorschubgeschwindigkeiten auf, so dass lange Streifen entstehen, die dann die Absaugung verstopfen oder teilweise auf dem Glas liegenbleiben. Außerdem ist die Vorschubgeschwindigkeit bei beiden Anwendungen deutlich (ca. 5 - 10 x) langsamer als beim reinen Randentschichten, also beim Abtragen der Funktionsschichten.

Bei einem von der Firma Macotec auf dem Markt angebotenen Verfahren wird erst mit einem Doppelmesser die Schutzfolie geschnitten und dann durch Absaugen entfernt und in einem zweiten Schritt die Funktionsschichten entfernt. Das Abtragen der Funktionsschicht(en) erfolgt mechanisch durch Abschleifen.

Die US 2013/0140291 A1 offenbart eine Vorrichtung zum Schneiden von Glasscheiben. Die Vorrichtung weist dazu eine Laserstrahlerzeugungseinrichtung und eine Schneideinrichtung mit einem Schneidrädchen auf. Zum Schneiden der Glastafel werden zunächst mittels der Laserstrahlerzeugungseinrichtung Rillen in die Glastafeloberfläche eingebracht. Anschließend wird das Glas mittels des Schneidrädchens geschnitten.

Die WO 2016/096435 A1 offenbart, dass eine funktionelle Beschichtung mittels eines Entschichtungswerkzeuges, das einen Laserstrahl erzeugt, abgetragen wird. Bei dem Entschichtungswerkzeug kann es sich auch um ein Schleifrad oder ein anderes geeignetes Werkzeug handeln. Zudem offenbart die WO 2016/096435 A1, dass die Vorrichtung ein Schneidwerkzeug mit einem Schneidrad oder einer Diamantnadel oder einem Laser aufweisen kann. Das Schneidwerkzeug schneidet die Glastafel an oder ritzt diese an.

Aufgabe der vorliegenden Erfindung ist somit die Bereitstellung eines Randentschichtungsverfahrens zum Abtragen der Schutzfolie von Glastafeln, vorzugsweise von Verbundglastafeln, wobei das Entschichten einfach, schnell, sicher und kostengünstig erfolgen soll.

Weitere Aufgabe der Erfindung ist die Verwendung einer Entschichtungseinrichtung zur Durchführung des Entschichtungsverfahrens.

Diese Aufgaben werden durch ein Entschichtungsverfahren gemäß Anspruch 1 und die Verwendung einer Entschichtungseinrichtung gemäß Anspruch 10 gelöst. Vorteilhafte Weiterbildungen der Erfindung werden in den sich anschließenden Unteransprüchen gekennzeichnet.

Im Folgenden wird die Erfindung anhand einer Zeichnung beispielhaft näher erläutert. Es zeigen:
- Figur 1:: Stark vereinfacht und schematisch eine Draufsicht auf eine Schneid- und Entschichtungsstation mit einer erfindungsgemäß verwendeten Entschichtungseinrichtung mit einer entschichteten Glastafel
- Figur 2:: Stark vereinfacht und schematisch einen Schnitt durch eine Glastafel mit einer darüber angeordneten erfindungsgemäß verwendeten Entschichtungseinrichtung
- Figur 3:: Stark vereinfacht und schematisch eine Draufsicht auf eine Glastafel mit Folienstreifenteilstücken vor dem Abschleifen
- Figur 4:: Stark vereinfacht und schematisch eine Draufsicht auf eine Glastafel vor dem Abschleifen nach einer weiteren Variante des erfindungsgemäßen Entschichtungsverfahrens

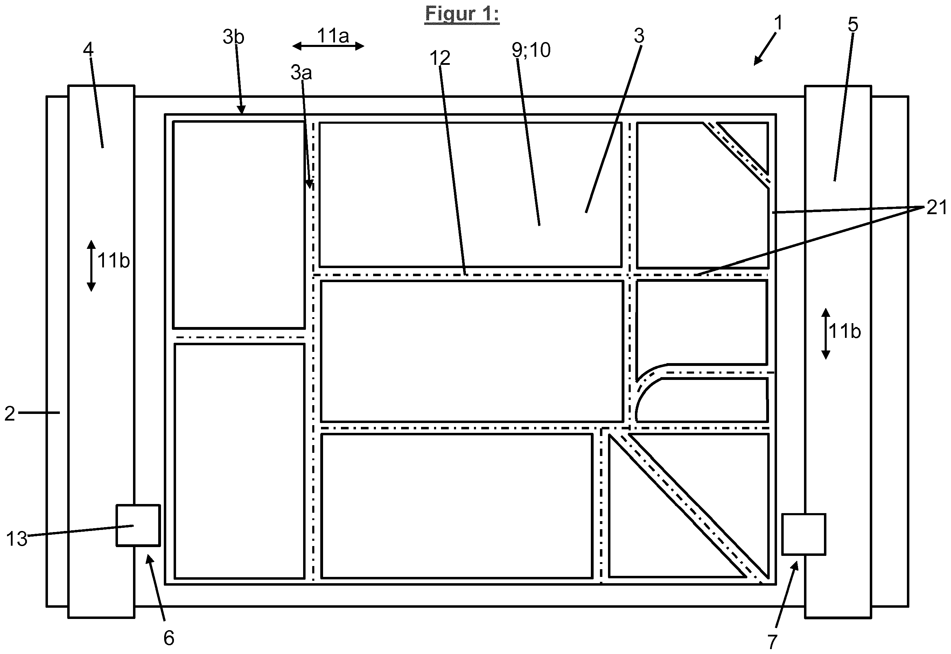

Eine Schneid- und Entschichtungsstation 1 (Fig. 1) weist vorzugsweise einen Auflagetisch 2 zur Aufnahme einer Glastafel 3, eine erste Verfahrbrücke 4, eine zweite Verfahrbrücke 5, eine Schneideinrichtung 6 und eine erfindungsgemäß verwendete Entschichtungseinrichtung 7 auf.

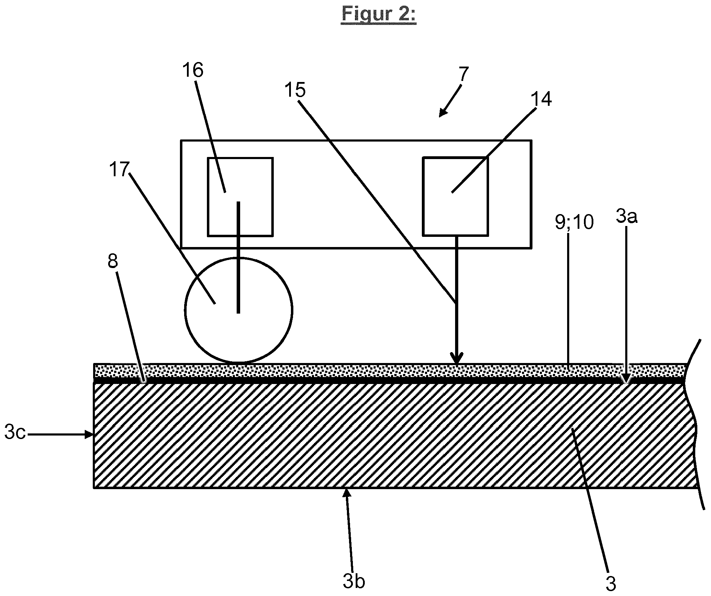

Die Glastafel 3 (Fig. 2) weist eine erste und zweite Glastafeloberfläche 3a;b sowie eine umlaufende Glastafelkante 3c auf. Bei der Glastafel 3 kann es sich z.B. um eine einzelne Glasscheibe (Fig. 2) oder eine Verbundglastafel aus mehreren miteinander verbundenen Glasscheiben handeln. Des Weiteren handelt es sich vorzugsweise um eine Glasrohtafel. Es kann sich aber auch um einen Glastafelzuschnitt handeln.

Zudem weist die Glastafel 3 an zumindest einer ihrer beiden Glasoberflächen 3a;b eine oberflächliche Funktionsbeschichtung 8 auf. Die Funktionsbeschichtung 8 kann eine oder mehrere einzelne Funktionsschichten aufweisen. Bei mehreren Funktionsschichten handelt es sich somit um ein Funktionsschichtenlaminat. Die Funktionsschichten ändern bestimmte Eigenschaften der Glastafel 3 bzw. verleihen dieser bestimmte Funktionen. Die Funktionen können dabei z.B. Wärmeschutz, Sonnenschutz, oder Beheizung sein. Bei den einzelnen Funktionsschichten handelt es sich vorzugsweise um metallische Schichten, z.B. um Niedrigemissionsschichten.

Die Funktionsbeschichtung 8 weist vorzugsweise eine Dicke von 1 < µm, auf.

Des Weiteren weist die Glastafel 3 an zumindest einer ihrer beiden Glasoberflächen 3a;b eine Schutzbeschichtung 9 in Form einer abziehbaren Schutzfolie 10 auf. Die Schutzbeschichtung 9 deckt die jeweilige Glasoberfläche 3a;b nach außen hin ab und schützt die darunter angeordnete Funktionsbeschichtung 8 oder, wenn keine Funktionsbeschichtung 8 vorhanden ist, die unbeschichtete Glasoberfläche 3a;b, vor mechanischer Beschädigung. Die Schutzbeschichtung 9 bildet somit die äußere bzw. außenliegende Schicht der Glastafel 3.

Im Gegensatz zur Funktionsbeschichtung 8 wird die Schutzbeschichtung 9 vor der endgültigen Verwendung der Glastafel 3 vollständig entfernt. Sie ist somit nicht dauerhaft vorhanden. Die Schutzfolie 10 wird abgezogen. Eine Funktionsbeschichtung 8 dagegen ist zumindest bereichsweise dauerhaft vorhanden.

Die Schutzfolie 10 besteht vorzugsweise aus Kunststoff, vorzugsweise Polyvinylchlorid (PVC), und ist von der Glastafeloberfläche 3a;b abziehbar.

Zudem weist die Schutzfolie 10 vorzugsweise eine Dicke von 20 bis 100 µm auf.

Die beiden Verfahrbrücken 4;5 überspannen den Auflagetisch 2 ober- und/oder unterseitig und sind jeweils in eine erste Verfahrrichtung 11a hin- und her über der Glastafel 3 verfahrbar. Hierzu sind entsprechende Antriebsmittel vorhanden. Die erste Verfahrrichtung 11a ist parallel zu einer Glastafelebene bzw. zu den beiden Glastafeloberflächen 3a;b.

Die Schneideinrichtung 6 dient in an sich bekannter Weise zum Schneiden bzw. Ritzen der Glastafeloberfläche(n) 3a;b entlang vorgegebener Ritz- bzw. Trennlinien 12. Handelt es sich bei der Glastafel 3 um eine einzelne Glasscheibe, wird lediglich eine der beiden Glastafeloberfläche(n) 3a;b geritzt. Die Schneideinrichtung 6 weist hierzu in an sich bekannter Weise einen Schneidkopf 13 mit einem Ritzwerkzeug, vorzugsweise einem Schneidrädchen, auf. Der Schneidkopf 13 ist in an sich bekannter Weise in eine zweite Verfahrrichtung 11b verfahrbar an der ersten Verfahrbrücke 4 gelagert. Hierzu sind entsprechende Antriebsmittel vorhanden. Die zweite Verfahrrichtung 11b ist senkrecht zur ersten Verfahrrichtung 11a und ebenfalls parallel zu einer Glastafelebene bzw. zu den beiden Glastafeloberflächen 3a;b. Das Schneidrädchen ist um eine horizontale Drehachse, die parallel zur Glastafelebene bzw. zu den beiden Glastafeloberflächen 3a;b ist, frei oder angetrieben drehbar. Zudem ist das Schneidrädchen um eine vertikale Drehachse, die senkrecht zur Glastafelebene bzw. zu den beiden Glastafeloberflächen 3a;b ist, frei oder angetrieben drehbar. Dadurch können in an sich bekannter Weise beliebige Schnittkonturen erzeugt werden.

Bei einer Verbundglastafel werden in an sich bekannter Weise beide Glastafeloberfläche(n) 3a;b, vorzugsweise gleichzeitig, geritzt. Die Glastafel 3 wird dann also ober- und unterseitig, vorzugsweise gleichzeitig, geritzt. Dazu sind zwei übereinander angeordnete Schneidköpfe 13 vorhanden.

Die erfindungsgemäß verwendete Entschichtungseinrichtung 7 dient zum Abtragen der Schutzbeschichtung 9 sowie der darunter angeordneten Funktionsbeschichtung 8. Dazu weist sie eine Laserstrahlerzeugungseinrichtung 14 zur Erzeugung eines Laserstrahls 15 und einen Schleifkopf 16 auf. Zudem ist die Entschichtungseinrichtung 7 in die zweite Verfahrrichtung 11b verfahrbar an der zweiten Verfahrbrücke 5 gelagert. Hierzu sind entsprechende Antriebsmittel vorhanden.

Die Laserstrahlerzeugungseinrichtung 14 dient zum Einschneiden der Schutzfolie 10, worauf weiter unten näher eingegangen wird. Dazu erzeugt die Laserstrahlerzeugungseinrichtung 14 den auf die Glasoberfläche 3a gerichteten Laserstrahl 15. Die Laserstrahlerzeugungseinrichtung 14 weist dazu eine Laserstrahlungsquelle und eine dazugehörige Optik auf. Dabei kann der Laserstrahl 15 von einer Ausgangsposition, in der er vertikal ausgerichtet ist, verschwenkt bzw. ausgelenkt werden.

Die Laserstrahlungsquelle erzeugt dabei vorzugsweise einen Laserstrahl 15, dessen Wellenlänge im Infrarotbereich liegt. Vorzugsweise liegt die Wellenlänge des Laserstrahls 15 bei 1 bis 19 µm, bevorzugt bei 9 bis 11 µm.

Zudem erzeugt die Laserstrahlungsquelle vorzugsweise einen Laserstrahl 15, dessen Laserleistung bei < 200 W, bevorzugt < 100 W, und/oder bei ≥ 5 W, bevorzugt bei ≥ 10 W, liegt.

Der Schleifkopf 16 dient zum Abtragen der eingeschnittenen Schutzfolie 10 und/oder zum Abtragen der Funktionsbeschichtung, worauf weiter unten näher eingegangen wird. Dazu weist der Schleifkopf 16 in an sich bekannter Weise zumindest ein Schleifwerkzeug, vorzugsweise zumindest ein Schleifrädchen 17, auf.

Das Schleifrädchen 17 ist um eine horizontale Drehachse, die parallel zur Glastafelebene bzw. zu den beiden Glastafeloberflächen 3a;b ist, frei oder angetrieben drehbar. Zudem ist das Schleifrädchen 17 um eine vertikale Drehachse, die senkrecht zur Glastafelebene bzw. zu den beiden Glastafeloberflächen 3a;b ist, frei oder angetrieben drehbar. Dadurch können in Kombination mit der Bewegung der Entschichtungseinrichtung 7 entlang der zweiten Verfahrbrücke 5 in an sich bekannter Weise beliebige Entschichtungskonturen erzeugt werden. Gemäß einer bevorzugten Ausführungsform weist der Schleifkopf 16 zwei Schleifrädchen (nicht dargestellt) gemäß der DE 196 322 40 A1 auf. Das erste Schleifrädchen weist in diesem Fall eine Dicke einer einfachen Entschichtungsbreite auf und das zweite Schleifenrädchen weist eine Dicke einer doppelten Entschichtungsbreite auf.

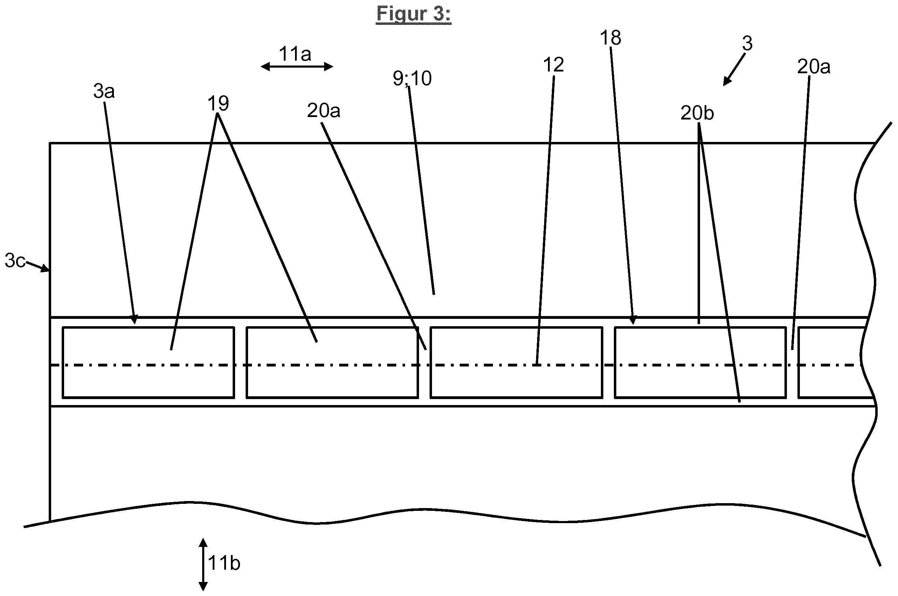

Im Folgenden wird nun das erfindungsgemäße Entschichtungsverfahren näher erläutert. Insbesondere wird das Entschichten einer eine Schutzfolie 10 als Schutzbeschichtung 9 aufweisenden Glastafel 3 erläutert:
Zum Randentschichten werden im Inneren der Glastafel 3 die Bereiche beidseits und entlang der noch einzubringenden, späteren Trenn- bzw. Ritzlinien 12 entschichtet. Dazu wird erfindungsgemäß zunächst ein abzutragender Folienstreifen 18 der Schutzfolie 10 mittels des Laserstrahls 15 aus der Schutzfolie 10 ausgeschnitten und dabei gleichzeitig in einzelne Folienstreifenteilstücke 19 zerteilt (Fig. 3). Die einzelnen Folienstreifenteilstücke 19 bleiben dabei an der Glastafel 3 haften. Das heißt, entlang der späteren Trenn- bzw. Ritzlinien 12 bzw. in eine Längsrichtung des abzutragenden Folienstreifens 18 gesehen sind mehrere, hintereinander angeordnete Folienstreifenteilstücke 19 vorhanden, die nicht miteinander verbunden sind und jeweils an der Glastafel 3 haften.

Das Ausschneiden des Folienstreifens 18 und der Folienstreifenteilstücke 19 erfolgt durch Einbringen von Brennspuren bzw. Laserspuren 20a;b in die Schutzfolie 10. Im Bereich der Laserspuren 20a;b ist die Schutzfolie 10 vollständig abgetragen, insbesondere verdampft bzw. verbrannt. Die Laserspuren 20a;b umgeben die Folienstreifenteilstücke 19. Sie bilden somit den Umriss bzw. die Kontur der Folienstreifenteilstücke 19.

Die Bewegung des Laserstrahls 15 erfolgt dabei mittels der Optik der Laserstrahlerzeugungseinrichtung 14 und durch Bewegung der Entschichtungseinrichtung 7 entlang der Verfahrbrücke 5 und Bewegung der Verfahrbrücke 5. Die Optik der Lasererzeugungseinrichtung 14 ist nämlich in der Lage, mit Hilfe von zwei verstellbaren Spiegeln (Scanoptik) den Laserstrahl 15 in einem Bereich von z.B. 100 mm x 100 mm (Scanfeld) zu bewegen.

Nach dem Ausschneiden des Folienstreifens 18 und dem Zerteilen in die einzelnen Folienstreifenteilstücke 19 werden diese mittels des Schleifrädchens 17 in an sich bekannter Weise abgeschliffen. Dabei wird zugleich die Funktionsbeschichtung 8 mit abgeschliffen. Um die gewünschten Konturen abschleifen zu können, wird in an sich bekannter Weise der Schleifkopf 13 mitsamt dem Schleifrädchen 17 in die zweite Verfahrrichtung 11b entlang der zweiten Verfahrbrücke 5 verfahren. Zudem wird die zweite Verfahrbrücke 5 in die erste Verfahrrichtung 11a verfahren. Und das Schleifrädchen 17 wird einerseits um seine Raddrehachse gedreht, und, wenn notwendig, um seine vertikale Hochachse verschwenkt.

Nach dem Abschleifen weist die Glastafel 3 an der bearbeiteten Glastafeloberfläche 3a Entschichtungsspuren 21 auf. Die Entschichtungsspuren 21 erstrecken sich jeweils entlang jeweils der späteren Ritz- bzw. Trennlinie 12 und beidseits neben dieser. Insbesondere ist die Ritz- bzw. Trennlinie 12 mittig in der Entschichtungsspur 21 angeordnet. Die Glastafel wird somit in doppelter Entschichtungsbreite beidseitig neben der späteren Ritz- bzw. Trennlinie 12 entschichtet.

Entlang der Glastafelkanten 3c erfolgt die Entschichtung - bei entsprechendem Endmaß der Glastafel 3 und bei ausreichender Qualität der Glastafelkanten 3c - vorzugsweise in einfacher Entschichtungsbreite. Gleiches gilt für auf Endmaß geschnittenen Glastafeln 3, bei denen nur noch eine Entschichtung entlang der Glastafelkanten 3c, aber nicht mehr im Bereich innerhalb der Glastafelkanten 3c erfolgt.

Dadurch, dass der abzutragende Folienstreifen 18 zuvor in die einzelnen Folienstreifenteilstücke 19 zerteilt wurde, rollt sich die Schutzfolie 10 beim Abschleifen auch bei höheren Vorschubgeschwindigkeiten nicht auf. Die einzelnen abgetragenen Folienstreifenteilstücke 19 können problemlos abgesaugt werden, ohne dass die Absaugung verstopft wird oder Folienreste auf der Glastafel 3 liegenbleiben. Somit wird mittels des erfindungsgemäßen Entschichtungsverfahrens eine schnelle, saubere und sichere Entschichtung gewährleistet.

Bei dem oben beschriebenen Verfahren werden Laserspuren 20a erzeugt, die quer bzw. senkrecht zur Längsrichtung des abzutragenden Folienstreifens 18 sind und Laserspuren 20b, die parallel zur Längsrichtung des abzutragenden Folienstreifens 18 sind. Dadurch sind die Folienstreifenteilstücke 19 bereits vor dem Abschleifen aus der Schutzfolie 10 ausgeschnitten bzw. von dem Rest der Schutzfolie 10 getrennt. Dabei müssen die Laserspuren 20a nicht senkrecht zur Längsrichtung des abzutragenden Folienstreifens 18 sein, sondern lediglich schräg dazu. Die Laserspuren 20a;b müssen auch nicht geradlinig sein.

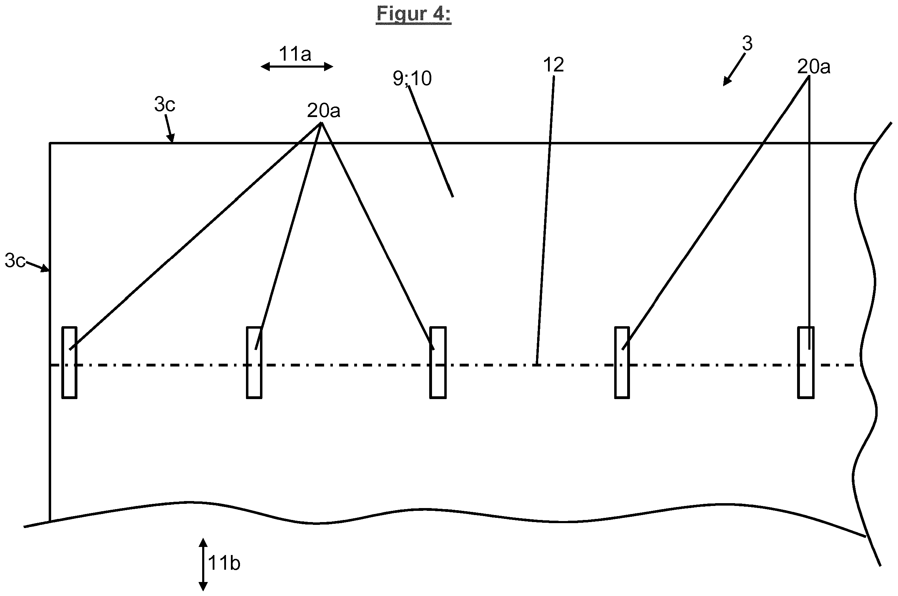

Im Rahmen der Erfindung liegt es dabei auch, dass vor dem mechanischen Abtragen des Folienstreifens 18 lediglich Laserspuren 20a schräg, insbesondere quer bzw. senkrecht, zur Längsrichtung des abzutragenden Folienstreifens 18 eingebracht werden (Fig. 4). Schräg bedeutet somit, dass die Laserspuren 20a in einem bestimmten Winkel von der Längsrichtung des abzutragenden Folienstreifens 18 abweichen.

Es kommt nur darauf an, dass die Laserspuren 20a derart eingebracht werden, dass der Folienstreifen 18 in Form von einzelnen, durch die Laserspuren 20a voneinander getrennten Folienstreifenteilstücken 19 abgetragen wird.

Des Weiteren ist es auch möglich, dass die Laserspuren 20a;b nicht als vollständig durchgezogen Linien erzeugt werden, also die Schutzfolie 10 im Bereich der Laserspuren 20a,b nicht vollständig abgetragen wird, sondern die Schutzfolie 10 im Bereich der Laserspuren 20a;b lediglich perforiert wird. Die Schutzfolie 10 wird beim Perforieren in, vorzugsweise gleichmäßigen, Abständen mit Löchern versehen.

Nach dem Entschichten werden dann die Trenn- bzw. Ritzlinien 12 mittels des Schneidkopfes 13 erzeugt und dann die Glastafel 3 an den Ritz- bzw. Trennlinien 12 in an sich bekannter Weise in einzelne Glastafelzuschnitte gebrochen.

Im Rahmen der Erfindung liegt es dabei auch, dass die Schneideinrichtung 6 von der Entschichtungseinrichtung 7 getrennt ist, also in einer anderen Station angeordnet ist.

Außerdem können der Schleifkopf 16 und die Laserstrahlerzeugungseinrichtung 14 auch voneinander entkoppelt sein. Das heißt, sie können getrennt voneinander verfahrbar sein und/oder auch an unterschiedlichen Verfahrbrücken befestigt sein.

Zudem kann das Erzeugen der Konturen auch dadurch erreicht werden, dass die Entschichtungseinrichtung 7 an einer stationären Brücke verfahrbar ist und die Glastafel während des Entschichtungsvorgangs bewegt wird. Es kommt nur darauf an, dass die Entschichtungseinrichtung 7 samt Schleifrädchen 17 und/oder Laserstrahl 15 und die Glastafel 3 entsprechende Relativbewegungen zueinander ausführen. Gleiches gilt für den Schneidvorgang.

Des Weiteren liegt es selbstverständlich auch im Rahmen der Erfindung, dass lediglich eine einzige Verfahrbrücke vorhanden ist und die Schneideinrichtung und die Entschichtungseinrichtung an derselben Verfahrbrücke angeordnet sind. Auch können aber Schleifkopf 16 und die Laserstrahlerzeugungseinrichtung 14 an unterschiedlichen Verfahrbrücken angeordnet sein.

Weisen die Glastafeln zudem an beiden Glastafeloberflächen eine Schutzfolie und gegebenenfalls eine Funktionsbeschichtung auf, erfolgt das Entschichten entweder für beide Glastafeloberflächen gleichzeitig oder nacheinander.

## Patentansprüche

1. Entschichtungsverfahren zum Randentschichten von Glastafeln (3), wobei die Glastafeln (3) zumindest an einer ihrer beiden Glasoberflächen (3a;b) eine Schutzbeschichtung (9) in Form einer abziehbaren Schutzfolie (10) und vorzugsweise eine darunter angeordnete Funktionsbeschichtung (8) aufweisen,
wobei die Schutzfolie (10) zum Randentschichten bereichsweise in Form zumindest eines Folienstreifens (18) mechanisch abgetragen, insbesondere abgeschliffen, wird,
**dadurch gekennzeichnet, dass**
vor dem mechanischen Abtragen des Folienstreifens (18) Laserspuren (20a;b) in die Schutzfolie (10) eingebracht werden, und wobei die Laserspuren (20a;b) derart eingebracht werden, dass der Folienstreifen (18) in Form von einzelnen, durch die Laserspuren (20a) voneinander getrennten Folienstreifenteilstücken (19) abgetragen wird.

2. Entschichtungsverfahren nach Anspruch 1,
**dadurch gekennzeichnet, dass**
die Laserspuren (20a) schräg, vorzugsweise senkrecht, zu einer Längsrichtung des abzutragenden Folienstreifens (18) eingebracht werden.

3. Entschichtungsverfahren nach Anspruch 1 oder 2,
**dadurch gekennzeichnet, dass**
a) die Schutzfolie (10) im Bereich der Laserspuren (20a;b) vollständig abgetragen, insbesondere verdampft bzw. verbrannt, wird
oder
b) die Schutzfolie (10) im Bereich der Laserspuren (20a;b) mittels Laserstrahlung perforiert wird.

4. Entschichtungsverfahren nach einem der vorhergehenden Ansprüche, **dadurch gekennzeichnet, dass**
die schrägen Laserspuren (20a) derart eingebracht werden, dass sie in Längsrichtung des abzutragenden Folienstreifens (18) gesehen hintereinander angeordnet sind.

5. Entschichtungsverfahren nach einem der vorhergehenden Ansprüche, **gekennzeichnet durch**
folgende Verfahrensschritte:
a) Ausschneiden des mindestens einen Folienstreifens (18) aus der Schutzfolie (10) und Zerteilen des Folienstreifens (18) in die einzelnen Folienstreifenteilstücke (19) mittels Laserstrahlung,
b) Mechanisches Abtragen, insbesondere Abschleifen, der Folienstreifenteilstücke (19).

6. Entschichtungsverfahren nach Anspruch 5,
**dadurch gekennzeichnet, dass**
a) die Folienstreifenteilstücke (19) derart ausgeschnitten werden, dass sie weiterhin an der Glastafel (3) haften,
und/oder
b) das Ausschneiden der Folienstreifenteilstücke (19) durch Einbringen der Laserspuren (20a;b) in die Schutzfolie (10) erfolgt, und die Laserspuren (20a;b) die Folienstreifenteilstücke (19) umgeben.

7. Entschichtungsverfahren nach einem der vorhergehenden Ansprüche, **dadurch gekennzeichnet, dass**
die Glastafel (3) die unter der Schutzbeschichtung (9) angeordnete Funktionsbeschichtung (8) aufweist und die Funktionsbeschichtung (8) beim mechanischen Abtragen, insbesondere Abschleifen, der Folienstreifenteilstücke (19) gleichzeitig mitabgetragen wird.

8. Entschichtungsverfahren nach einem der vorhergehenden Ansprüche, **dadurch gekennzeichnet, dass**
die abgetragenen Folienstreifenteilstücke (19) abgesaugt werden.

9. Entschichtungsverfahren nach einem der vorhergehenden Ansprüche, **dadurch gekennzeichnet, dass**
a) zur Erzeugung der Laserspuren (20a;b) ein Laserstrahl (15) mit einer Wellenlänge im Infrarotbereich, vorzugsweise mit einer Wellenlänge von 1,0 bis 12 µm, bevorzugt von 9 bis 11 µm, verwendet wird,
und/oder
b) zur Erzeugung der Laserspuren (20a;b) ein Laserstrahl (15) mit einer Laserleistung < 200 W, bevorzugt mit einer Laserleistung < 100 W, und/oder mit einer Laserleistung von ≥ 5 W, bevorzugt mit einer Laserleistung von ≥ 10 W, verwendet wird.

10. Verwendung einer Entschichtungseinrichtung (7) zur Durchführung des Verfahrens gemäß einem der vorhergehenden Ansprüche, wobei die Entschichtungseinrichtung (7) eine Schleifeinrichtung zum Abschleifen der Schutzfolie (10) und eine Laserstrahlerzeugungseinrichtung (14) zur Erzeugung eines Laserstrahls (15) zum Abtragen der Schutzfolie (10) in Form von Laserspuren (20a;b) vor dem Abschleifen der Schutzfolie (10) aufweist.

11. Verwendung nach Anspruch 10,
**dadurch gekennzeichnet, dass**
a) die Laserstrahlerzeugungseinrichtung (14) Mittel zur Erzeugung eines Laserstrahls (15) mit einer Wellenlänge im Infrarotbereich, vorzugsweise mit einer Wellenlänge von 1 bis 12 µm, bevorzugt von 9 bis 11 µm, aufweist,
und/oder
b) die Laserstrahlerzeugungseinrichtung (14) Mittel zur Erzeugung eines Laserstrahls (15) mit einer Laserleistung < 200 W, bevorzugt mit einer Laserleistung < 100 W, und/oder mit einer Laserleistung von ≥ 5 W, bevorzugt mit einer Laserleistung von ≥ 10 W, aufweist.

## Claims

1. A decoating method for the edge decoating of glass sheets (3), the glass sheets (3) having at least on one of their two glass surfaces (3a;b) a protective coating (9) in the form of a peel-off protective film (10), and preferably having a functional coating (8) situated thereunder,
the protective film (10) being partially mechanically removed, in particular ground away, for the edge decoating, in the form of at least one film strip (18),
**characterized in that**
before the mechanical removal of the film strip (18), laser traces (20a;b) are introduced into the protective film (10), the laser traces (20a;b) being introduced in such a way that the film strip (18) is removed in the form of individual film strip partial pieces (19) separated from one another by the laser traces (20a).

2. The decoating method according to Claim 1,
**characterized in that**
the laser traces (20a) are introduced at an angle, preferably perpendicular, to a longitudinal direction of the film strip (18) that is to be removed.

3. The decoating method according to Claim 1 or 2,
**characterized in that**
a) the protective film (10) is completely removed, in particular vaporized or burnt, in the region of the laser traces (20a;b),
or
b) the protective film (10) is perforated in the region of the laser traces (20a;b), using laser radiation.

4. The decoating method according to one of the preceding claims,
**characterized in that**
the angular laser traces (20a) are introduced in such a way that they are situated one after the other, seen in the longitudinal direction of the film strip (18) that is to be removed.

5. The decoating method according to one of the preceding claims,
**characterized by**
the following method steps:
a) cutting the at least one film strip (18) out from the protective film (10), and dividing the film strip (18) into the individual film strip partial pieces (19) using laser radiation,
b) mechanical removal, in particular grinding away, of the film strip partial pieces (19).

6. The decoating method according to Claim 5,
**characterized in that**
a) the film strip partial pieces (19) are cut out in such a way that they continue to adhere to the glass sheet (3),
and/or
b) the cutting out of the film strip partial pieces (19) is done by introducing the laser traces (20a;b) into the protective film (10), and the laser traces (20a;b) surround the film strip partial pieces (19).

7. The decoating method according to one of the preceding claims,
**characterized in that**
the glass sheet (3) has the functional coating (8) situated under the protective coating (9), and the functional coating (8) is simultaneously also removed during the mechanical removal, in particular during the grinding away, of the film strip partial pieces (19).

8. The decoating method according to one of the preceding claims,
**characterized in that**
the removed film strip partial pieces (19) are suctioned away.

9. The decoating method according to one of the preceding claims,
**characterized in that**
a) in order to produce the laser traces (20a;b), a laser beam (15) is used having a wavelength in the infrared range, preferably having a wavelength from 1.0 to 12 µm, preferably 9 to 11 µm,
and/or
b) for the production of the laser traces (20a;b), a laser beam (15) is used having a laser power < 200 W, preferably having a laser power < 100 W, and/or having a laser power of ≥ 5 W, preferably having a laser power of ≥ 10 W.

10. Use of a decoating device (7) for carrying out the method according to one of the preceding claims, the decoating device (7) having a grinding device for grinding away the protective film (10) and a laser beam-producing device (14) for producing a laser beam (15) for removing the protective film (10) in the form of laser traces (20a;b) before the grinding away of the protective film (10).

11. Use according to Claim 10,
**characterized in that**
a) the laser beam-producing device (14) has means for producing a laser beam (15) having a wavelength in the infrared range, preferably having a wavelength from 1 to 12 µm, preferably 9 to 11 µm,
and/or
b) the laser beam-producing device (14) has means for producing a laser beam (15) having a laser power < 200 W, preferably having a laser power < 100 W, and/or having a laser power of ≥ 5 W, preferably having a laser power of ≥ 10 W.

## Revendications

1. Procédé de dépouillement pour le dépouillement des bords de feuilles de verre (3), les feuilles de verre (3) présentant, au moins sur l'une de leurs deux surfaces de verre (3a;b), un revêtement de protection (9) sous la forme d'un film de protection (10) pouvant être retiré et, de préférence, un revêtement fonctionnel (8) disposé en dessous,
où, pour le dépouillement des bords, le film de protection (10) est enlevé mécaniquement, en particulier poncé, par zones sous la forme d'au moins une bande de film(18),
**caractérisé en ce que**
avant l'enlèvement mécanique de la bande de film (18), des traces de laser (20a;b) sont introduites dans le film de protection (10), et les traces de laser (20a;b) étant introduites de telle sorte que la bande de film (18) est enlevée sous forme de morceaux de bande de film (19) individuels, séparés les uns des autres par les traces de laser (20a).

2. Procédé de dépouillement selon la revendication 1,
**caractérisé en ce que**
les traces de laser (20a) sont introduites obliquement, de préférence perpendiculairement, par rapport à une direction longitudinale de la bande de film (18) à enlever.

3. Procédé de dépouillement selon la revendication 1 ou 2,
**caractérisé en ce que**
a) le film de protection (10) est complètement enlevé, en particulier évaporé ou brûlé, dans la zone des traces de laser (20a;b)
ou
b) le film de protection (10) est perforé au moyen d'un rayonnement laser dans la zone des traces de laser (20a;b).

4. Procédé de dépouillement selon l'une quelconque des revendications précédentes,
**caractérisé en ce que**
les traces de laser obliques (20a) sont introduites de telle sorte qu'elles sont disposées les unes derrière les autres, vues dans la direction longitudinale de la bande de film (18) à enlever.

5. Procédé de dépouillement selon l'une quelconque des revendications précédentes,
**caractérisé par**
les étapes de procédé suivantes :
a) la découpe de la au moins une bande de film (18) dans le film de protection (10) et la division de la bande de film (18) en les différents morceaux de bande de film (19) au moyen d'un rayonnement laser,
b) l'enlèvement mécanique, en particulier le ponçage, des morceaux de bande de film (19).

6. Procédé de dépouillement selon la revendication 5,
**caractérisé en ce que**
a) les morceaux de bande de film (19) sont découpés de telle sorte qu'ils continuent à adhérer à la feuille de verre (3),
et/ou
b) la découpe des morceaux de bande de film (19) s'effectue en introduisant les traces de laser (20a;b) dans le film de protection (10), et les traces de laser (20a;b) entourent les morceaux de bande de film (19).

7. Procédé de dépouillement selon l'une quelconque des revendications précédentes,
**caractérisé en ce que**
la feuille de verre (3) présente le revêtement fonctionnel (8) disposé sous le revêtement de protection (9) et le revêtement fonctionnel (8) est simultanément enlevé lors de l'enlèvement mécanique, en particulier du ponçage, des morceaux de bande de film (19).

8. Procédé de dépouillement selon l'une quelconque des revendications précédentes,
**caractérisé en ce que**
les morceaux de bande de film (19) enlevés sont aspirés.

9. Procédé de dépouillement selon l'une quelconque des revendications précédentes,
**caractérisé en ce que**
a) pour générer les traces de laser (20a;b), on utilise un faisceau laser (15) ayant une longueur d'onde dans le domaine infrarouge, de préférence une longueur d'onde de 1,0 à 12 µm, de préférence de 9 à 11 µm,
et/ou
b) pour générer les traces de laser (20a ; b), un faisceau laser (15) avec une puissance laser < 200 W, de préférence avec une puissance laser < 100 W, et/ou avec une puissance laser de ≥ 5 W, de préférence avec une puissance laser de ≥ 10 W, est utilisée.

10. Utilisation d'un dispositif de dépouillement (7) pour la mise en oeuvre du procédé selon l'une des revendications précédentes, le dispositif de dépouillement (7) comprenant un dispositif de ponçage pour poncer le film de protection (10) et un dispositif de génération de faisceau laser (14) pour générer un faisceau laser (15) pour enlever le film de protection (10) sous la forme de traces laser (20a;b) avant du ponçage du film de protection (10).

11. Utilisation selon la revendication 10,
**caractérisé en ce que**
a) le dispositif de génération de faisceau laser (14) comprend des moyens pour générer un faisceau laser (15) ayant une longueur d'onde dans le domaine infrarouge, de préférence une longueur d'onde de 1 à 12 µm, de préférence de 9 à 11 µm,
et/ou
b) le dispositif de génération de faisceau laser (14) comprend des moyens pour générer un faisceau laser (15) avec une puissance laser < 200 W, de préférence avec une puissance laser < 100 W, et/ou avec une puissance laser de ≥ 5 W, de préférence avec une puissance laser de ≥ 10 W.
